# EUROPEAN PATENT SPECIFICATION

(11) **EP 1 513 708 B1**
(45) Date of publication and mention of the grant of the patent: **05.12.2007**
(21) Application number: 03738811.3
(22) Date of filing: 04.06.2003
(51) Int. Cl.: B60R 22/195

(54) **A PRE-TENSIONER**
VORSPANNER
PRE-TENSIONNEUR

(30) Priority: 06.06.2002 GB 0212990
(43) Date of publication of application: 16.03.2005
(73) Proprietor: AUTOLIV DEVELOPMENT AB, 447 83 Vargarda (SE)
(72) Inventor: ARNAUD, Denis, F-78440 Lainville-en-Vexin (FR)
(74) Representative: Parry, Simon James
(86) International application number: PCT/SE2003/000912
(87) International publication number: WO 2003/104049

(56) References cited:
- US-A- 4 258 934
- US-A- 4 441 738
- US-A- 4 458 921
- US-B1- 6 250 682

## Description

**THE PRESENT INVENTION** relates to a pre-tensioner, and more particularly relates to a safety-belt pre-tensioner intended for use in a motor vehicle.

It has been proposed previously to provide a pre-tensioner in a motor vehicle, the pre-tensioner being operative, in response to a signal indicative that an accident is occurring, to apply tension to the seat-belt. Thus the seat-belt is tightened firmly about the occupant of the seat before the accident has developed to such a stage that the occupant begins to move forwardly relative to the seat. Thus all the "slack" that might initially have been present in the seat-belt is removed, meaning that, as the occupant moves forwardly, the seat-belt immediately begins to restrain the occupant. The occupant will move forward slightly, as the seat-belt stretches, but the risk of the occupant moving forwardly by a sufficient distance to impact with a fixed part of the vehicle, such as the steering-wheel or dashboard, is minimised.

Generic US-A-4,458,921 discloses a prior proposed seat-belt tensioning device in which a piston is provided which is moved along a cylinder in response to the actuation of a pyrotechnic charge. An axially extending bore is provided through the piston, and a deformable rod is arranged to pass through the bore. One end of the rod is coiled into a plurality of helical turns, resembling a spring, which is retained within the cylinder, and the other end of the rod passes through the bore in the piston to emerge from the cylinder for connection directly to the seat-belt. The diameter of the plurality of helical turns in the rod is greater than the diameter of the bore through the piston. The U.S. Specification describes how, on actuation of the pyrotechnic device, the piston will move along the cylinder, thus moving the rod with it and thereby applying tension to the safety-belt. If a very substantial force is applied to the safety-belt, the rod is allowed to deform, such that the initially coiled portion of the rod begins to uncoil. As the rod uncoils, is withdrawn from the cylinder, through the bore in the piston, thus absorbing energy.

In the prior art arrangement, the rod is connected directly to a safety-belt, meaning that the tensioning device must be located in a position where the rod can be directly connected to the safety-belt, whilst still allowing sufficient room for the pre-tensioner to operate.

Modem-day pre-tensioners usually utilise a horizontally extending cylinder, with the piston within the cylinder being connected to the safety-belt by means of a wire which is guided by a pulley. Clearly, the arrangement of US-4,458,921 cannot be utilised in such a context as the deformable rod would not readily pass around a pulley. Another pre-tensioner having a corrugated iron sheet as deformation element that is connected directly to the seat bolt is known from US 4 258 934 A1.

The present invention seeks to provide an improved safety-belt pre-tensioner.

According to the present invention, there is provided a pre-tensioner for pre-tensioning a safety-belt, the pre-tensioner comprising a cylinder; means to inject gas at one end of the cylinder; a piston moveable along the cylinder upon injection of gas into the cylinder; a pulley-wheel at said one end of the cylinder; and a wire or cable extending from a fitting to be connected to part of a safety-belt, around the pulley-wheel and into the cylinder; the wire or cable being connected by a connector to a deformable rod or bar; the deformable rod or bar passing through a passage formed in the piston, and terminating in a coil formed from at least one turn of the rod or bar; there being a spacer element adapted to space the piston from the said one end of the cylinder, the spacer element being dimensioned so that the connector connecting the wire and the deformable bar may move axially of the cylinder towards the said one end thereof without being impeded by the spacer.

Preferably, the spacer element is a cylindrical sleeve receivable within the cylinder and defining a cylindrical bore dimensioned to receive the connector, and to allow the connector to move substantially freely along the bore.

Advantageously, the piston is provided with a mechanism to permit movement of the piston within the cylinder in one direction and prevent movement of the piston with the cylinder in the opposite direction.

Conveniently, the mechanism comprises one or more wedging elements located between the tapering exterior part of the piston, and the side wall of the cylinder.

Preferably, the pre-tensioner comprises a plurality of said wedging elements, each wedging element being a bore.

Advantageously, the deformable rod passes through a tapering passage formed within the piston and terminates in a plurality of helical turns.

In order that the invention may be more readily understood, and so that further features thereof may be appreciated, the invention will now be described, by way of example, with reference to the accompanying drawings in which:
FIGURE 1 is a perspective view of a pre-tensioner unit in accordance with the invention, with parts thereof cut-away,
FIGURE 2 is a sectional diagrammatic view of the pre-tensioner illustrated in Figure 1, provided for purposes of explanation, and
FIGURE 3 is a view corresponding to Figure 2, illustrating the pre-tensioner during actuation thereof, with part of the piston unit being shown cut-away for the sake of clarity of illustration.

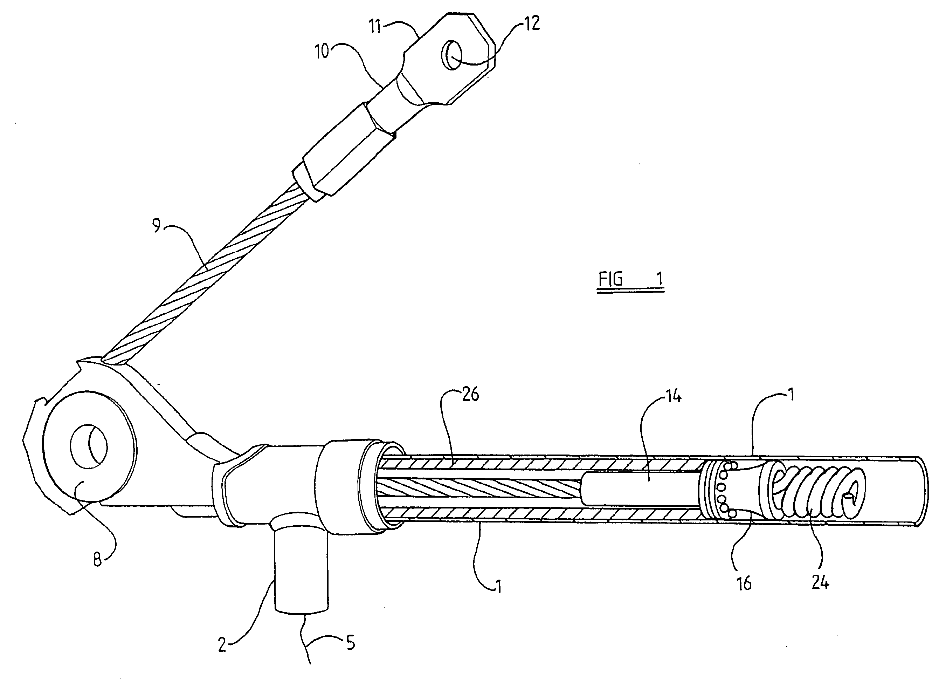

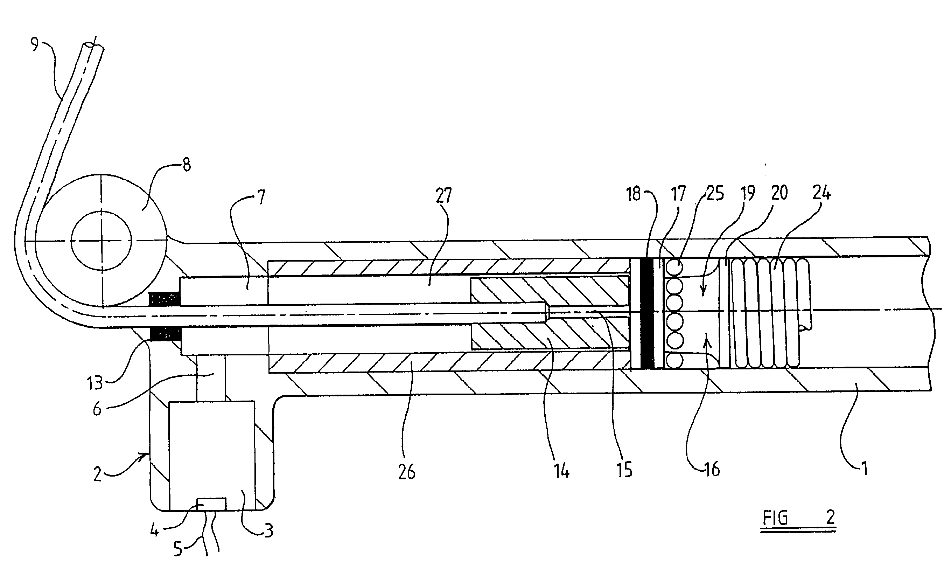

Referring initially to Figure 1, a safety-belt pre-tensioner is illustrated, which comprises an elongate tube or cylinder 1 which is adapted to be mounted in a horizontal position, for example, within a motor vehicle. Mounted on the tube or cylinder 1, adjacent one end thereof, is a housing 2 which contains a pyrotechnic charge 3, and an associated igniter 4 (both shown in Figure 2), adapted to receive a signal through wires 5. The pyrotechnic charge communicates by means of a passage 6 with a chamber 7 that constitutes one end of the cylinder or tube 1. The internal diameter of the chamber 7 is less than the internal diameter of the cylinder or tube 1.

A pulley-wheel 8 is rotatably mounted at the said one end of the cylinder or housing, and a wire 9 is provided which engages and passes partly around the pulley-wheel 8. The free end of the wire 9 is provided with a fitting 10 which is securely crimped to the end of the wire, the fitting 10 defining a plate 11 having an aperture 12 therein, to which part of a safety-belt buckle may be mounted. However, it should be appreciated that whilst the preferred embodiment illustrated comprises a rotatable pulley-wheel 8, the pulley-wheel could be replaced with a non-rotatable guide for the wire 9.

Turning now to consider also Figure 2, it will be seen that the wire 9 extends from the pulley-wheel 8 through a seal 13 provided in one end wall of the chamber 7. The wire 9 extends from the seal 13 axially along the interior of the tube or cylinder 1. The end of the wire 9 within the tube or cylinder 1 is connected, by means of a cylindrical connecting clamp 14, to one end of a deformable rod 15. The clamp 14 is of greater diameter than the wire 9 and the rod 15.

A piston unit 16 is provided within the cylinder 1. The piston unit 16 comprises a piston body which has, at one end, a radially outwardly extending first flange 17. A peripheral groove is formed in the flange 17 which contains a seal 18, which could, for example, take the form of a conventional O-ring seal. The flange 17 is dimensional so as to be slidable along the cylinder 1, whilst the seal 18 ensures a gas-tight fit within the cylinder 1.

Secured to the face of the flange 17 remote from the clamp 14 is the narrow end of an outwardly tapering generally conical body section 19, the body section 19 terminating with a further outwardly directed flange 20 which is of substantially the same outer diameter as the first flange 17. The outwardly directed further flange 20 is therefore also slideable along the cylinder 1 but does not form a gas-tight seal with the cylinder 1.

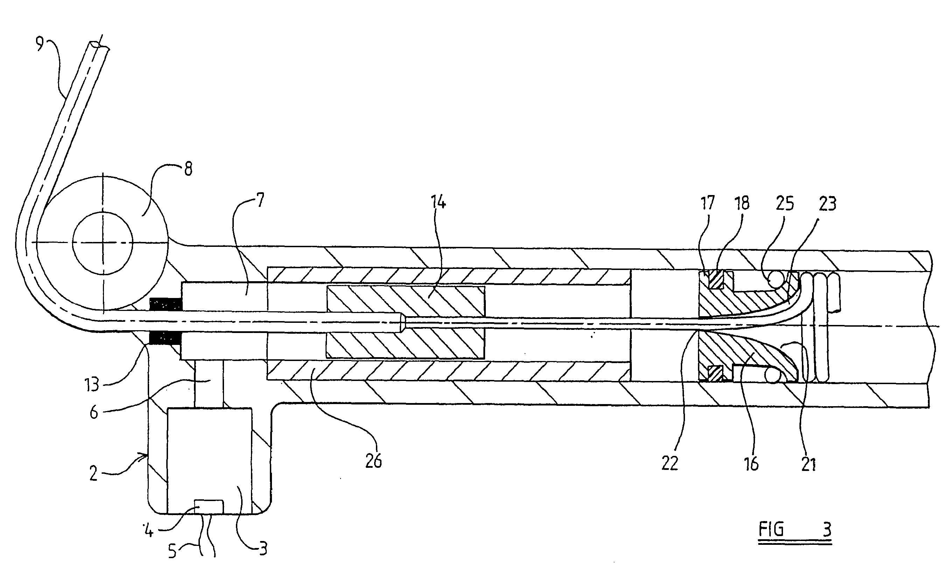

A generally conical tapering passage 21 (see Figure 3) extends through the piston 16, the passage having a small opening 22 formed in the first flange 17, and a larger opening 23 formed in the further flange 20. The deformable rod 15 extends from the connecting clamp 14 through the small opening 22, passes through the conical passage 21 and extends through the large opening 23 where the remaining portion of the rod 15 is coiled with one or more turns to form a coil 24.

A plurality of balls 25 are provided which surround the outwardly tapering section 19 of the piston 16.

A cylindrical sleeve 26 is provided which is located within the cylinder 1. The sleeve 26 has an outer diameter which is a snug fit within the cylinder 1, and the sleeve 26 defines an axial bore 27 which has a diameter slightly greater than the diameter of the connecting clamp 14, such that the connecting clamp 14 is freely slideable along the bore 27 of the sleeve 26. The sleeve 26 is located between the first flange 17 of the piston 16 and the chamber 7 formed at the end of cylinder 1 adjacent the pulley-wheel 8, and thus prohibits movement of the piston 16 from the position illustrated in Figure 2, towards the pulley-wheel 8.

In use of the pre-tensioner, if ever a force exceeding a predetermined threshold is applied to the cable 9, tending to withdraw the cable from the pre-tensioner, then the cable is allowed to pay-out from the pre-tensioner, so that the pre-tensioner may provide a degree of energy absorption, even before actuation by ignition of the pyrotechnic charge 3. If a force of sufficient magnitude is applied to the cable 9 when the pre-tensioner is in its initial state, as illustrated in Figure 2, then the connecting clamp 14 may move to the left, as shown in Figure 3, within the bore 27 defined within the sleeve 26. As the connecting clamp 14 moves to the left, because the piston 16 is prevented from also moving to the left, the end of the deformable rod 15 connected to the cable 9 will be drawn to the left causing the first coil 24 of deformable rod to be un-coiled and to move through the conical passage 21 formed in the tapered body section 19 of the piston 16, and out through the relatively small diameter opening 22. As the turns of the rod 15 are un-coiled in this way, a substantial amount of energy is absorbed. The connector clamp 14 may move to the left towards a position substantially as shown in Figure 3.

On the other hand, should an accident arise which is sensed by a sensor connected to the wires 5, the ignitor 4 will be actuated causing the pyrotechnic charge 3 to ignite. Gas will thus be caused to flow quickly through the passage 6 into the chamber 7 and thus into the bore 27 defined within the sleeve 26. The gas will act on the piston 16, thereby moving the piston towards the right, as shown in Figures 2 and 3. If there is no substantial force resisting movement of the piston, the coils 24 of the deformable rod 15 will also move to the right with the piston (by virtue of engagement with the flange 20 of the piston 16), without uncoiling. However, if a very substantial force is applied, the deformable rod 15 may be drawn past the piston 16 the coils may deform, in the manner described above, hence absorbing energy.

As the piston unit 16 moves towards the right, the balls 25 are caused to move with the piston 16 whilst being retained in part of the space surrounding the tapering portion 19 of the piston 16 adjacent the first flange 17. However, once the piston has stopped moving towards the right following actuation of the pyrotechnic charge, should a force on the cable 9 then tend to move the piston back towards the left, the balls 25 will move towards the right relative to the piston 16, riding up over the tapering wall of the section 19 of the piston, thus becoming wedged tightly between the tapering body section 19 of the piston 16 and the wall of the cylinder 1 (as shown in Figure 3), and so preventing the piston from moving further towards the left. The balls 25 thus serve as wedging elements. If the piston is locked in position in this way and then a substantial force is applied to the cable 9, the cable 9 may be withdrawn from the pre-tensioner, but only by un-coiling the coils 24 of the deformable rod 15, with a resultant absorption of energy.

## Claims

1. A pre-tensioner for pre-tensioning a safety-belt, the pre-tensioner comprising a cylinder (1); means (2-6) to inject gas at one end of the cylinder; a piston (16) moveable along the cylinder upon injection of gas into the cylinder; a pulley-wheel (8) at said one end of the cylinder; and a wire or cable (9), connectable to a safety-belt to extend from said safety-belt, around the pulley-wheel and into the cylinder; **characterized by** the wire or cable being connected by a connector (14) to a deformable rod or bar (15); the deformable rod or bar passing through a passage (22) formed in the piston, and terminating in a coil (24) formed from at least one turn of the rod or bar; there being a spacer element (26) adapted to space the piston from the said one end of the cylinder, the spacer element being dimensioned so that the connector connecting the wire and the deformable bar may move axially of the cylinder towards the said one end thereof without being impeded by the spacer element.

2. A pre-tensioner according to Claim 1, wherein the spacer element (26) is a cylindrical sleeve (26) receivable within the cylinder (1) and defining a cylindrical bore (27) dimensioned to receive the connector (14), and to allow the connector to move substantially freely along the bore.

3. A pre-tensioner according to Claim1 or Claim 2, wherein the piston (16) is provided with a mechanism (19, 25) to permit movement of the piston within the cylinder (1), in one direction and prevent movement of the piston within the cylinder in the opposite direction.

4. A pre-tensioner according to Claim 3, wherein the mechanism (19, 25) comprises one or more wedging elements (25) located between a tapering exterior part (19) of the piston, and the side-wall of the cylinder (1).

5. A pre-tensioner according to Claim 4, comprising a plurality of said wedging elements (25), each wedging element being a ball (25).

6. A pre-tensioner according to any one of the preceding Claims, wherein the deformable rod (15) passes through a tapering passage (21) formed within the piston and terminates in a plurality of helical turns (24).

## Patentansprüche

1. Vorspanneinrichtung zum Vorspannen eines Sicherheitsgurtes, wobei die Vorspanneinrichtung einen Zylinder (1), Mittel (2-6) zum Einleiten von Gas an einem Ende des Zylinders, einen Kolben (16), der sich beim Einleiten von Gas in dem Zylinder bewegt, eine Laufrolle (8) an dem einen Ende des Zylinders sowie einen Draht oder ein Kabel (9), der/das mit dem Sicherheitsgurt verbunden werden kann und sich von dem Sicherheitsgurt um die Laufrolle und in den Zylinder erstreckt, umfasst, **dadurch gekennzeichnet, dass** der Draht oder das Kabel durch ein Verbindungsstück (14) mit einer verformbaren Stange oder einem Stab (15) verbunden ist, wobei die verformbare Stange oder der Stab einen in dem Kolben gebildeten Durchgang (22) passiert und in einer von mindestens einer Wicklung der Stange oder des Stabes gebildeten Spule (24) endet, wobei ein Abstandselement (26) vorgesehen ist, das angepasst ist, den Kolben von dem einen Ende des Zylinders zu beabstanden, und wobei das Abstandselement so bemessen ist, dass das den Draht und den verformbaren Stab verbindende Verbindungsstück axial zum Zylinder zu dem einen Ende des Zylinders bewegt werden kann, ohne von dem Abstandselement behindert zu werden.

2. Vorspanneinrichtung nach Anspruch 1, bei welcher das Abstandselement (26) eine zylindrische Hülse (26) ist, die im Zylinder (1) aufgenommen wird und eine zylindrische Bohrung (27) definiert, die so bemessen ist, dass sie das Verbindungsstück (14) aufnehmen kann und es dem Verbindungsstück ermöglicht, sich im Wesentlichen frei entlang der Bohrung zu bewegen.

3. Vorspanneinrichtung nach Anspruch 1 oder 2, bei welcher der Kolben (16) mit einem Mechanismus (19, 25) versehen ist, um dem Kolben das Bewegen innerhalb des Zylinders (1) in eine Richtung zu erlauben und den Kolben am Bewegen in die entgegengesetzte Richtung zu hindern.

4. Vorspanneinrichtung nach Anspruch 3, bei welcher der Mechanismus (19, 25) ein oder mehrere Verkeilelemente (25) umfasst, die zwischen einem sich verjüngenden äußeren Teil (19) des Kolbens und der Seitenwand des Zylinders
(1) angeordnet sind.

5. Vorspanneinrichtung nach Anspruch 4, welche eine Vielzahl von Verkeilelementen (25) umfasst, wobei jedes Verkeilelement eine Kugel (25) ist.

6. Vorspanneinrichtung nach einem der vorhergehenden Ansprüche, bei welcher die verformbare Stange (15) einen sich verjüngenden, im Kolben gebildeten Durchgang (21) passiert und in einer Vielzahl spiralförmiger Windungen (24) endet.

## Revendications

1. Prétensionneur servant à précontraindre une ceinture de sécurité, le prétensionneur comprenant un cylindre (1), des moyens (2 à 6) permettant d'injecter du gaz à une extrémité du cylindre ; un piston (16) mobile le long du cylindre lors de l'injection de gaz dans le cylindre ; une roue de poulie (8) au niveau de ladite une extrémité du cylindre ; et un fil ou câble (9) pouvant être relié à une ceinture de sécurité pour s'étendre depuis ladite ceinture de sécurité, autour de la roue de poulie et dans le cylindre ; **caractérisé par** le fil ou câble relié par un connecteur (14) à une tige ou barre déformable (15) ; la tige ou barre déformable passant à travers un passage (22) formé dans le piston et se terminant en une spirale (24) formée à partir d'au moins une spire de la tige ou barre ; un espaceur (26) étant conçu pour espacer le piston de ladite une extrémité du cylindre, l'espaceur étant dimensionné de sorte que le connecteur reliant le fil et la barre déformable peut se déplacer axialement du cylindre vers ladite une extrémité de celui-ci sans être gêné par l'espaceur.

2. Prétensionneur selon la revendication 1, dans lequel l'espaceur (26) est un manchon cylindrique (26) pouvant être reçu dans le cylindre (1) et définissant un perçage cylindrique (27) dimensionné pour recevoir le connecteur et pour permettre au connecteur (14) de se déplacer essentiellement librement le long du perçage.

3. Prétensionneur selon la revendication 1 ou 2, dans lequel le piston (16) est muni d'un mécanisme (19, 25) pour permettre le mouvement du piston à l'intérieur du cylindre (1) dans une direction et empêcher le mouvement du piston à l'intérieur du cylindre dans la direction opposée.

4. Prétensionneur selon la revendication 3, dans lequel le mécanisme (19,25) comprend un ou plusieurs éléments de coinçage (25) situés entre une partie extérieure effilée (19) du piston et la paroi latérale du cylindre (1).

5. Prétensionneur selon la revendication 4, comprenant une pluralité desdits éléments de coinçage (25), chaque élément de coinçage étant une bille (25).

6. Prétensionneur selon l'une quelconque des revendications précédentes, dans lequel la tige déformable (15) passe à travers un passage effilé (21) formé à l'intérieur du piston et se termine en une pluralité de spires hélicoïdales (24).
